# FASCICULE DE BREVET EUROPEEN

(11) **EP 2 393 199 B1**
(45) Date de publication et mention de la délivrance du brevet: **10.07.2013**
(21) Numéro de dépôt: 11168089.8
(22) Date de dépôt: 30.05.2011
(51) Int. Cl.: H02P 5/68, A63H 27/00, B64C 39/02, B64D 31/00, B64D 27/24

(54) **Procédé de commande synchronisée des moteurs électriques d'un drone télécommandé à voilure tournante tel qu'un quadricoptère**
Synchronisiertes Steuerungsverfahren der Elektromotoren einer ferngesteuerten Drone mit Drehflügeln, wie beispielsweise einem Quadricopter
Method for synchronised control of electric motors of a remote controlled rotary-wing drone such as a quadricopter

(30) Priorité: 02.06.2010 FR 1054316
(43) Date de publication de la demande: 07.12.2011
(73) Titulaire: Parrot, 75010 Paris (FR)
(72) Inventeur: Chaperon, Cédric, 75019 PARIS (FR); Eline, Pierre, 95400 Arnouville-les-Gonesse (FR)
(74) Mandataire: Dupuis-Latour, Dominique

(56) Documents cités:
- "Multicopter Table", Multicopter Wiki, Multicopter Encyclopedia , 14 février 2010 (2010-02-14), XP002635969, Extrait de l'Internet: URL:http://multicopter.org/wiki/Multicopte r_Table [extrait le 2011-04-26]
- "Mikrokopter", Multicopter Wiki, Multicopter Encyclopedia , 24 août 2010 (2010-08-24), XP002635970, Extrait de l'Internet: URL:http://multicopter.org/wiki/Mikrokopte r [extrait le 2011-04-26]
- "en/ Microkopter", Wiki: MikroKopter.de , 30 mars 2011 (2011-03-30), XP002635971, Extrait de l'Internet: URL:http://www.mikrokopter.de/ucwiki/en/Mi kroKopter [extrait le 2011-04-26]
- "Hexacopter", YouTube , 14 octobre 2010 (2010-10-14), XP002635972, Extrait de l'Internet: URL:http://www.youtube.com/watch?v=fyYujjP 5J-k&feature=mfu_in_order&list=UL [extrait le 2011-04-26]

## Description

La présente invention concerne un procédé de commande synchronisée d'une pluralité de moteurs électriques, pour un drone télécommandé à voilure tournante tel qu'un quadricoptère.

On entend ici par drone à voilure tournante toutes les formules d'hélicoptères connues comportant plusieurs moteurs, à savoir la formule tandem à birotor banane, la formule Kamof à rotors coaxiaux contrarotatifs, et tout particulièrement la formule quadricoptère, ou quadrirotor, à quatre rotors coplanaires à pas fixe dont les moteurs sont pilotés indépendamment par un système intégré de navigation et de contrôle d'attitude.

Un exemple typique d'un tel drone est le *AR.Drone* de Parrot SA, Paris, France, qui est un quadricoptère équipé d'une série de capteurs (accéléromètres et gyromètres trois axes, altimètre, caméra de visée verticale) ainsi que d'un système de stabilisation automatique en vol stationnaire dont le principe est décrit dans le WO 2009/109711 (Parrot). Le drone est également pourvu d'une caméra frontale captant une image de la scène vers laquelle se dirige le drone.

Dans un tel drone de type quadricoptère, la voilure tournante est constituée de quatre groupes propulsifs comprenant, chacun, une hélice entraînée par un moteur électrique par l'intermédiaire d'un système de réduction de la vitesse de rotation, généralement très élevée, du moteur. Le moteur d'entraînement de chaque groupe propulsif est commandé par un microcontrôleur propre, lequel est piloté en fonction des paramètres de vol par un contrôleur central unique, commun à l'ensemble des groupes propulsifs.

On comprend que la qualité de navigation d'un drone comportant une pluralité de groupes propulsifs dépend grandement de la précision avec laquelle les microcontrôleurs commandant les moteurs des groupes propulsifs sont pilotés par le contrôleur central. Ce dernier est en effet responsable de la traduction des actions de navigation imposées par l'utilisateur en termes de signaux de pilotage à appliquer aux microcontrôleurs des moteurs.

D'autre part, il est impératif de réaliser une synchronisation parfaite des commandes des moteurs, car il ne suffit pas de fournir aux microcontrôleurs des signaux de pilotage pertinents, encore faut-il qu'ils leur parviennent de manière synchrone, le moindre décalage temporel entre ces signaux pouvant conduire à des instabilités dans le comportement du drone.

Un procédé connu de commande de drones du type quadricoptère utilise la modulation de largeur d'impulsion PWM *(Pulse Width Modulation),* qui consiste à moduler la largeur d'une impulsion pour envoyer une consigne correspondante aux microcontrôleurs des moteurs. L'avantage de cette technique est qu'elle peut s'appliquer à divers types de moteurs, moteurs avec balais ou sans balais par exemple. Cependant, elle ne peut garantir une commande parfaitement synchronisée des moteurs entre eux.

Une autre technique, mise en oeuvre dans un appareil dénommé "Mikrokopter", consiste à relier le contrôleur central à chacun des microcontrôleurs microcontrôleur est considéré comme un périphérique accessible par ce bus, identifié par une adresse définie par déplacement de cavaliers. L'envoi des commandes aux différents microcontrôleurs est opéré de façon séquentielle, donc de façon non synchronisée entre elles.

Aussi, un but de la présente invention est de proposer un procédé de commande synchronisée d'une pluralité de moteurs électriques, chaque moteur étant commandé par un microcontrôleur et l'ensemble des microcontrôleurs étant piloté par un contrôleur central, qui permettrait d'assurer en toutes circonstances une synchronisation parfaite de la commande des moteurs.

Ce procédé prévoit de manière en elle-même connue (appareil "Mikrokopter" précité) les étapes énoncées au préambule de la revendication 1.

Ce but est atteint, conformément à l'invention, par les caractéritiques énoncées dans la partie caractérisante de la revendication 1.

Ainsi, dans le cas d'un drone du type quadricoptère par exemple, lorsque le contrôleur central doit envoyer à chacun des quatre microcontrôleurs une instruction concernant le pilotage du moteur associé, il compose un message unique contenant les quatre instructions affectées chacune du paramètre d'adresse du microcontrôleur concerné, et envoie ce message simultanément aux quatre microcontrôleurs sur les quatre lignes de communication série asynchrone. A la réception, chaque microcontrôleur prélève en même temps dans le message, grâce au paramètre d'adresse, l'instruction qui lui revient et pilote le moteur correspondant en conséquence. De cette manière, la commande des quatre moteurs est rigoureusement synchronisée.

A titre d'exemple, ladite instruction est une valeur de consigne de vitesse à appliquer à chaque moteur. Il s'agit là bien entendu d'une instruction de première importance, puisque c'est elle qui régit la navigation du drone. Les messages contenant cette instruction de vitesse sont émis avec une périodicité de quelques millisecondes.

D'autre part, l'invention prévoit également que ladite instruction est une commande de pilotage d'un équipement associé aux moteurs. Cette disposition présente l'avantage que le pilotage de l'équipement considéré est réalisé sans avoir recours à des câbles de liaison supplémentaires entre le contrôleur central disposé dans la structure principale du drone et les microcontrôleurs, situés avec les moteurs associés à l'extrémité de quatre bras s'entendant depuis la structure principale. On évite ainsi d'alourdir inutilement les bras du drone.

Parmi les équipements envisagés, on peut citer des diodes électroluminescentes LEDs de couleur différente que l'on peut piloter depuis le contrôleur central.

Afin de permettre la remontée d'informations depuis les microcontrôleurs vers le contrôleur central, il est prévu par l'invention que ladite instruction est une requête concernant une donnée relative au fonctionnement des moteurs.

Par exemple, si le contrôleur central veut connaître la vitesse d'un moteur, il peut envoyer sur les lignes de la liaison série asynchrone un message contenant une instruction de requête de vitesse spécifiant le paramètre d'adresse du microcontrôleur associé au moteur concerné. A la réception, seul le microcontrôleur destinataire émettra un message de réponse à la requête en fournissant sur la ligne de communication la vitesse demandée. Les autres microcontrôleurs ignorent le message de requête puisque leur propre paramètre d'adresse n'y est pas spécifié.

Selon l'invention, l'étape préliminaire consiste également à interposer sur chaque ligne de liaison un bloc inhibiteur de communication sur ladite ligne, ledit bloc inhibiteur étant piloté par le contrôleur central. Ce mode de communication particulier entre le contrôleur central et les microcontrôleurs permet, quand cela est nécessaire, de n'adresser qu'un seul microcontrôleur à la fois.

De même, il est proposé avantageusement par l'invention que l'étape préliminaire consiste également à établir successivement entre le contrôleur central et au moins un microcontrôleur, au moyen des blocs inhibiteurs, un protocole de réinitialisation d'un micrologiciel (*firmware*) dudit microcontrôleur.

On peut ainsi mettre à jour sélectivement le micrologiciel contenu dans chaque mémoire et s'assurer que tous les microcontrôleurs contiennent la même version de micrologiciel.

A cet effet, le procédé selon l'invention comprend également au moins une étape de requête concernant au moins une donnée relative à la mémoire de micrologiciel des microcontrôleurs et/ou aux moteurs associés. En particulier, ladite donnée est le numéro de version du micrologiciel. D'une manière générale, l'étape de requête est réalisée par le contrôleur central en envoyant à au moins un microcontrôleur, au moyen des blocs inhibiteurs, un message de requête indiquant ladite donnée et en attendant la réponse dudit microcontrôleur avant de réémettre un nouveau message.

Enfin, l'invention prévoit une procédure particulière dite de "coupe-circuit " destinée à être mise en application à chaque fois qu'au moins un moteur ne peut fonctionner conformément aux instructions reçues, en particulier l'instruction de vitesse, par exemple lorsque le moteur viendrait à freiner brusquement du fait d'un objet qui se serait pris dans l'hélice entraînée par le moteur.

Cette procédure de coupe-circuit consiste en ce qu'en cas de défaillance d'un moteur, le microcontrôleur associé envoie un message d'urgence à destination du contrôleur central.

Après réception du message d'urgence, le contrôleur central envoie aux microcontrôleurs un message contenant une instruction de vitesse de consigne nulle à appliquer aux moteurs.

En pratique, la défaillance d'un moteur est détectée sur la valeur de la dérivée de la vitesse du moteur, une variation brusque de dérivée indiquant une anomalie dans le fonctionnement du moteur.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La Figure 1 est un schéma d'une liaison série asynchrone entre un contrôleur central et quatre microcontrôleurs d'un drone de type quadricoptère.
La Figure 2 est un schéma d'une mémoire de micrologiciel de l'un des microcontrôleurs de la Figure 1.
La Figure 3 est un organigramme de la réinitialisation du micrologiciel de la Figure 2.

On va maintenant décrire un exemple de réalisation du dispositif de l'invention.

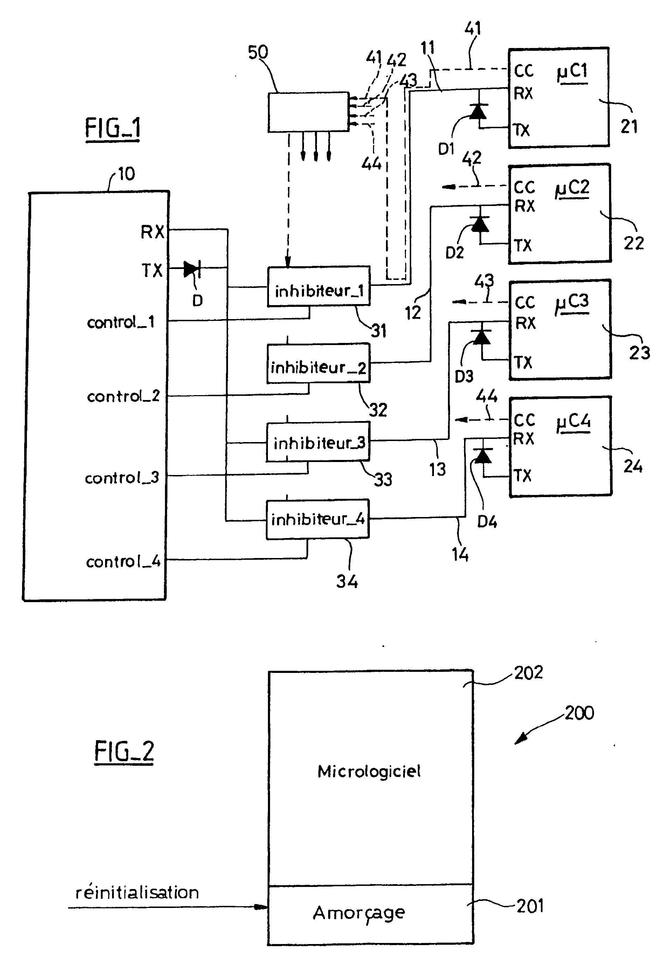

Sur la Figure 1 est représentée une liaison série asynchrone entre un contrôleur central 10 et quatre microcontrôleurs 21, 22, 23, 24. Ce système de communication est notamment destiné à la commande synchronisée de quatre moteurs, non représentés sur la Figure 1, appartenant à quatre groupes propulsifs d'un drone à voilure tournante du type quadricoptère.

Plus précisément, chaque moteur est commandé par l'un des microcontrôleurs 21, 22, 23, 24, et l'ensemble des microcontrôleurs est piloté par le contrôleur central 10 en fonction des paramètres de vol imposés par le logiciel de navigation du drone.

La réception RX et l'émission TX de messages entre le contrôleur central 10 et chacun des microcontrôleurs 21, 22, 23, 24 sont multiplexées sur une seule et même ligne 11, 12, 13, 14 de communication UART *(Universal Asynchronous ReceiverlTransmitter).* Comme le montre la Figure 1, une diode, D₁, D₂, D₃, D₄ est placée entre les bornes de réception RX et les bornes d'émission TX du contrôleur principal 10 et des microcontrôleurs 21, 22, 23, 24, afin d'éviter la réception de signaux électriques sur les bornes d'émission TX.

De plus, on peut voir sur la Figure 1 qu'un bloc inhibiteur 31, 32, 33, 34 est placé sur chaque ligne 11, 12, 13, 14 de communication. Les blocs inhibiteurs sont commandés par le contrôleur central 10 sur les sorties *control_1, control_2*, *control_3* et *control_4* de manière établir ou interrompre à volonté la communication sur les lignes UART. A titre d'exemple, les blocs inhibiteurs 31, 32, 33, 34 peuvent être constitués de transistors MOSFET fonctionnant en commutateurs.

Les quatre moteurs du drone sont commandés de façon synchronisée conformément à un procédé qui consiste, dans une première étape préliminaire préalable à la mise en fonctionnement proprement dite des moteurs, à attribuer un paramètre d'adresse à chaque couple moteur-microcontrôleur associé.

Cette opération est réalisée par le contrôleur central 10 en envoyant successivement à chaque microcontrôleur, avec une commande appropriée des blocs inhibiteurs 31, 32, 33, 34, un message d'attribution codé sur un octet, par exemple contenant un en-tête codant sur trois bits ('Ob000') l'instruction objet du message, en l'espèce l'attribution d'un paramètre d'adresse (SET ADDRESS), suivi du paramètre d'adresse codé sur cinq bits. Le microcontrôleur destinataire lit alors dans le message le paramètre d'adresse qui lui est attribué et le stocke en mémoire.

Toujours dans la phase préliminaire, il peut être préférable, en particulier après une remise à zéro du système ou lors d'un allumage des moteurs, de connaître la version courante des micrologiciels *(firmwares)* des microcontrôleurs contrôleurs et de s'assurer que les microcontrôleurs sont bien équipés de la même version du micrologiciel.

Pour cela, le contrôleur central 10 envoie successivement à chaque microcontrôleur, en commandant de façon appropriée les blocs inhibiteurs 31, 32, 33, 34, un message de requête concernant la version de la mémoire de micrologiciel du microcontrôleur. Le message de requête, codé sur un octet, contient par exemple un en-tête codant sur trois bits ('0b010') l'instruction de requête de version de micrologiciel (GET_VERSION), suivi de cinq bits de bourrage. Le microcontrôleur destinataire du message retourne alors sur la ligne de communication la version de la mémoire de micrologiciel demandée.

En règle générale, quand le contrôleur central 10 envoie un message impliquant une réponse tel qu'un message de requête, il attend la réponse avant d'émettre un nouveau message. En effet, toute collision de messages risquerait d'amener les moteurs dans un état indéterminé.

Bien entendu, d'autres données peuvent faire l'objet d'une requête, notamment des données relatives aux moteurs eux-mêmes, comme le fournisseur, la référence, le numéro de lot de fabrication, etc.

S'il constate que la version du micrologiciel doit être remplacée par une autre plus récente, le contrôleur central 10 engage avec le microcontrôleur concerné une procédure de réinitialisation du micrologiciel.

Il est important de noter que cette procédure de réinitialisation peut être également effectuée d'office par le contrôleur central avec chacun des microcontrôleurs 21, 22, 23, 24 après une remise à zéro ou au démarrage du drone. De cette manière, on s'assure que tous les microcontrôleurs portent bien des micrologiciels de la même version.

Pour réinitialiser une mémoire de micrologiciel, le contrôleur central 10 envoie au seul microcontrôleur concerné, par une commande appropriée des blocs inhibiteurs 31, 32, 33, 34, un message de réinitialisation codé sur un octet, par exemple contenant un en-tête codant sur trois bits (0b111) l'instruction de réinitialisation (FLASH_MODE), suivi d'un mot de cinq bits ('0b00000').

Comme le montre la Figure 2, le message de réinitialisation est reçu au niveau de la mémoire de micrologiciel 200 dans une zone 201 d'amorçage (*bootloader*) protégée en écriture et permettant la mise à jour du microloçage *(bootloader)* protégée en écriture et permettant la mise à jour du micrologiciel stocké dans une zone 202 réinscriptible par flashage.

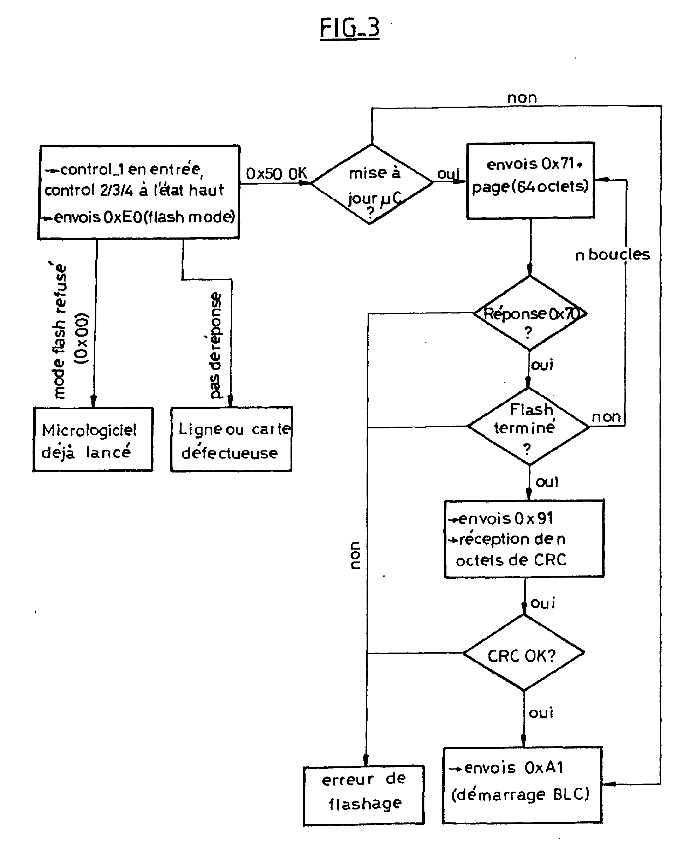

La procédure de réinitialisation entre le contrôleur central 10 et l'un des microcontrôleurs, ici le microcontrôleur 21, s'effectue alors conformément à la Figure 3.

Le contrôleur central 10 établit la communication avec le microcontrôleur 21 en actionnant la sortie *control* et en inhibant les sorties *control 2, control 3* et *control* 4 au moyen de blocs inhibiteurs 32, 33, 34, puis envoie une instruction 'OxEO' de passage de la mémoire de micrologiciel 200 dans un mode de flashage/démarrage. En l'absence de réponse, on en déduit que la liaison série ou la mémoire est défectueuse. Lorsque le micrologiciel de la carte est déjà lancé, c'est-à-dire en dehors d'une phase de remise à zéro ou de démarrage, le microcontrôleur 21 répond par la négative au travers d'un message de refus 'OxOO'. Dans le cas contraire, la carte indique qu'elle est prête à recevoir des instructions du contrôleur central 10 par l'envoi d'un message d'acceptation 'Ox5O'.

S'il n'est pas nécessaire d'effectuer une mise à jour du micrologiciel de la mémoire de micrologiciel 200, on passe directement en phase de démarrage par l'envoi d'une instruction 'OxA1' à laquelle la carte 200 répond par un acquittement '0xA0'.

Si le micrologiciel doit être mis à jour, le contrôleur central 10 envoie alors en boucle n pages successives de 64 octets accompagnées d'une instruction de flashage 'Ox71'. A chaque page reçue, la mémoire de micrologiciel 200 doit répondre par un acquittement '0x70', sinon on considère qu'il y a eu erreur de flashage et la procédure de réinitialisation est interrompue. Lorsque la mise à jour est terminée, le contrôleur central requiert par une instruction 'Ox91' l'envoi des codes de contrôle (CRC) de chaque page flashée. La mémoire de micrologiciel 200 fournit alors ces codes et, s'ils sont conformes, l'instruction de démarrage '0xA1' est envoyée, suivie en retour d'un acquittement '0xA0'.

Pour démarrer les moteurs, il suffit de leur envoyer une valeur de consigne de vitesse supérieure à 20%, par exemple, de la valeur maximale '511', " soit '103' pour une vitesse codée sur neuf bits. Lorsqu'aucune consigne n'est envoyée depuis plus de quelques dizaines de millisecondes, 50 ms par exemple, le moteur s'arrête.

En fonctionnement nominal du drone, le contrôleur central 10 est naturellement amené à émettre des messages de commande aux microcontrôleurs 21, 22, 23, 24 ne serait-ce que pour leur transmettre des instructions de pilotage établies par le contrôleur central en fonction du logiciel de navigation du drone.

Une instruction de pilotage de grande importance concerne la vitesse des moteurs. Pour ce type d'instruction, le contrôleur central 10 envoie simultanément sur chaque ligne 11, 12, 13, 14 de communication un message codé sur cinq octets contenant un en-tête codant sur trois bits ('Ob001') l'instruction de pilotage de la vitesse moteur (SET_VALUE), suivie de quatre valeurs de consigne de vitesse codées sur neuf bits, associées chacune à un moteur en fonction du paramètre d'adresse préalablement attribuée, et d'un bit de bourrage.

Les quatre microcontrôleurs 21, 22, 23, 24 reçoivent simultanément le message de commande de vitesse, dans lequel ils prélèvent la valeur de consigne qui leur revient et l'appliquent au moteur associé.

Comme cela a été souligné plus haut, ce procédé de commande présente l'avantage d'une parfaite synchronisation de la commande des quatre moteurs, condition essentielle pour une bonne stabilité de vol du drone. Inversement, le contrôleur central 10 peut interroger chaque microcontrôleur 21, 22, 23, 24 quant à la vitesse du moteur associé.

Pour cela, il envoie simultanément sur chaque ligne 11, 12, 13, 14 de communication un message de requête de vitesse de moteur. Le message de requête codé sur un octet par exemple contient un en-tête codant sur trois bits ('Ob100') l'instruction de requête de vitesse de moteur (GET_SPEED), suivie des cinq bits du paramètre d'adresse du microcontrôleur concerné. Le contrôleur central 10 se met alors en position d'attente de la réponse à la requête qu'il a émise. A la réception, seul le microcontrôleur identifié dans le message par son paramètre d'adresse retourne sur la ligne de communication la valeur demandée de la vitesse courante du moteur associé.

Les instructions de pilotage peuvent concerner d'autres équipements que les moteurs du drone, comme par exemple des diodes électroluminescentes (LEDs) disposées à proximité de chaque moteur.

Dans ce cas, le contrôleur central 10 envoie simultanément sur chaque ligne 11, 12, 13, 14 de communication un message codé sur deux octets contenant un en-tête codant sur trois bits ('Ob011') l'instruction de pilotage des diodes LED rouge et verte par exemple (SET_LED), suivi de quatre fois deux bits correspondant, pour chaque microcontrôleur identifié par son paramètre d'adresse, à l'état allumé ou éteint de la diode rouge et de la diode verte, et de quatre bits de bourrage.

L'intérêt de cette procédure est qu'elle évite l'installation de câbles de commande supplémentaires le long des bras reliant le contrôleur central aux moteurs. Il en résulte un gain en poids du drone.

Comme pour l'instruction SET_VALUE, les quatre microcontrôleurs 21, 22, 23, 24 reçoivent simultanément le message de commande des diodes, dans lequel ils prélèvent la consigne (bit = 1 : LED allumée, bit = 0 : LED éteinte) qu'ils doivent appliquer aux diodes rouge et verte associées. Enfin, une fonction très importante pour la sécurité du drone concerne la procédure de "coupe-circuit" qui doit être mise en oeuvre lorsque se produit une anomalie dans le fonctionnement d'un ou plusieurs moteurs, notamment en cas de freinage brutal d'un moteur pour une cause accidentelle quelconque, telle qu'un objet pris dans une hélice.

Chaque microcontrôleur 21, 22, 23, 24 mesure en permanence la vitesse du moteur associé ou sa dérivée, et diagnostique une défaillance du moteur si la valeur de la vitesse mesurée n'est plus conforme à la valeur de consigne ou si la dérivée de la vitesse est trop grande. Dans ce cas, le microcontrôleur correspondant écoute la ligne de communication et, dès qu'elle est inactive, envoie un message d'urgence à destination du contrôleur central 10. Ce message est répété plusieurs fois de sorte que, même si le contrôleur central émet un quelconque message de commande, le nombre de messages d'urgence envoyés dépasse la longueur du message de commande.

Après réception du message d'urgence, le contrôleur central 10 décide d'arrêter tous les moteurs afin d'éviter le risque d'instabilité et envoie par conséquent aux microcontrôleurs, via l'instruction SET_VALUE, une consigne de vitesse de valeur nulle. On entend par "valeur nulle" la valeur zéro ou une valeur inférieure à 20% (par exemple) de la valeur maximale '511' définie plus haut, soit '103'.

Une variante de réalisation de ce "coupe-circuit" consiste à prévoir pour chaque moteur une ligne supplémentaire dédiée respective 41, 42, 43, 44 en plus de la ligne de signal correspondante 11, 12, 13, 14, reliant une sortie spécifique CC de chaque microcontrôleur 21, 22, 23, 24 à une logique 50 côté contrôleur central (un circuit matériel distinct du contrôleur 10) susceptible d'activer les inhibiteurs 31, 32, 33, 34 en cas de détection d'u défaut, matérialisé par un passage à l'état haut de l'une des lignes 41, 42, 43 ou 44. L'activation des inhibiteurs va interdire la transmission de toute consigne de vitesse aux moteurs qui, comme expliqué plus haut, vont s'arrêter automatiquement au bout de quelques dizaines de millisecondes faute de réception d'une consigne de vitesse.

Le drone retombera alors à la verticale, sans vrille du fait de l'arrêt quasi-simultané des quatre moteurs.

De façon générale, la solution de l'invention que l'on vient d'exposer, qui met en oeuvre une consigne numérique par liaison série unique, présente de nombreux avantages, notamment par rapport à une consigne envoyée de manière classique en commande PWM. En particulier :
- les quatre moteurs recevant leur consigne d'asservissement en même temps, la synchronisation des consignes envoyées à chacun des moteurs est très bonne ;
- la consigne envoyée numériquement par une liaison série n'est pas entachée d'erreurs liées à la mesure analogique de la largeur des impulsions, comme dans le cas d'une consigne envoyée sous forme de modulation PWM ;
- la liaison numérique peut être utilisée pour piloter d'autres organes associés au microcontrôleur des moteurs (des LEDs par exemple) ;
- la liaison est bidirectionnelle, ce qui permet de recevoir des informations en provenance des microcontrôleurs des moteurs, par exemple une information de défaut pour actionner un coupe-circuit ;
- les deux propriétés précédentes peuvent être utilisées pour mettre à jour le logiciel des microcontrôleurs des moteurs, en interrogeant le système sur sa version du micrologiciel et, si elle est différente, en envoyant par la même liaison la nouvelles version de ce micrologiciel.

Enfin et surtout, l'information numérique envoyée par la liaison série permet l'envoi d'une consigne de plus haut niveau, en particulier d'une consigne explicite de vitesse des moteurs plutôt qu'une consigne PWM pilotant la tension électrique. Par rapport à un contrôle en tension, le contrôle en vitesse est d'un très grand intérêt dans la mesure où :
- il permet de gérer la dispersion des performances des moteurs électriques, inhérente à leur fabrication : en effet, il n'est pas rare de rencontrer des écarts de rendement de ± 10% dans un lot de moteurs électriques, et le contrôle en vitesse permettra d'obtenir la même vitesse d'hélice avec la même consigne pour tous les moteurs du lot quels que soient les écart de rendement ; le contrôle en vitesse permet ainsi de monter des moteurs aux performances assez différentes, y compris des moteurs provenant de fournisseurs différents ;
- il permet également de prendre en compte d'autres variations de rendement du bloc moteur, notamment les variations mécaniques résultant des frottements des engrenages et de l'ajustement des axes, qui seront compensées par le contrôle en vitesse, ce qui ne serait pas le cas d'un contrôle en tension ;
- le contrôle en vitesse présente aussi l'avantage de conserver une consigne identique lorsque la batterie de l'engin baisse : en effet, avec une commande PWM qui pilote la tension électrique, lorsque la batterie baisse le courant délivré baisse et la commande en tension doit être augmentée pour fournir la même puissance ; la commande en vitesse s'affranchit de ce problème ;
- d'une manière générale le contrôle en vitesse permet d'améliorer le fonctionnement sur toute la plage de contrôle des moteurs en rendant linéaire le contrôle du moteur.

Le contrôle en vitesse plutôt qu'en tension laisse cependant subsister un inconvénient.

En effet, avec une consigne en vitesse, la borne supérieure de la plage de commande, en d'autres termes la vitesse maximale que peut atteindre le moteur, n'est pas connue *a priori.* Cette vitesse maximale est liée à de nombreux paramètres tels que l'état de décharge de la batterie, le rendement propre du moteur, les frottements mécaniques, etc.

*A contrario,* en pilotant le moteur avec une consigne en tension, la borne haute est connue : on demande au microcontrôleur de délivrer au moteur la tension maximale de batterie à un instant donné, et on atteint alors naturellement la borne supérieure de la plage de commande.

Avec une consigne en vitesse il serait certes possible de définir une borne supérieure de "pire cas", correspondant à la vitesse atteinte par un moteur de rendement faible alimenté par une batterie presque déchargée. Mais cette méthode ne permet pas de faire fonctionner le système à sa puissance maximale.

Or, les algorithmes de pilotage du drone ont besoin de connaître la borne haute de la plage de commande du moteur, notamment pour déterminer les conditions de saturation d'un moteur, afin de ne pas dépasser la valeur de consigne correspondante. Il est également nécessaire de connaitre les limites de chaque moteur pour bien exploiter le domaine de vol, par exemple lorsque le drone descend rapidement et que l'on souhaite donner la puissance maximale des moteurs pour freiner sa descente.

Selon un perfectionnement de l'invention, il est possible de conserver un contrôle en vitesse tout en palliant l'inconvénient de ne pas connaître a *priori* la borne supérieure de la plage de commande.

La solution consiste à utiliser la possibilité de recevoir des informations envoyées par les microcontrôleurs des moteurs. Le contrôleur central 10 envoie à chaque microcontrôleur 21, 22, 23, 24, à intervalles réguliers mais à une fréquence peu élevée (par exemple une fois par seconde), une instruction GET MAXSPEED de requête d'estimation de la vitesse maximale du moteur qui lui est associé.

Le microcontrôleur évalue alors la vitesse maximale de son moteur associé par le biais d'un algorithme interne, basé sur l'observation de la tension appliquée au moteur pour une vitesse résultante connue, et sur une prédiction qui peut être une courbe préenregistrée des caractéristiques du moteur (à la mise sous tension la valeur peut être initialisée à une valeur "pire cas", qui sera corrigée périodiquement en mesurant le comportement réel du moteur).

Le résultat de cette évaluation est transmis au contrôleur central en réponse à la requête, de sorte que celui-ci peut être informé en permanence de la variation des performances de chaque moteur durant le vol du drone, en fonction notamment de la baisse de charge de la batterie.

## Revendications

1. Procédé de commande synchronisée d'une pluralité de moteurs électriques pour un drone télécommandé à voilure tournante tel qu'un quadricoptère, chaque moteur étant commandé par un microcontrôleur (21, 22, 23, 24) et l'ensemble des microcontrôleurs étant piloté par un contrôleur central (10), ce procédé comprenant :
- une étape préliminaire consistant à attribuer à chaque microcontrôleur un paramètre d'adresse ; et
- en fonctionnement, au moins une étape de commande proprement dite consistant :
• pour le contrôleur central, à envoyer un message contenant au moins une instruction spécifiée par le paramètre d'adresse d'un microcontrôleur destinataire chargé d'exécuter ladite instruction, et
• pour chaque microcontrôleur destinataire, à prélever et exécuter l'instruction qui lui est adressée dans ledit message,
procédé **caractérisé en ce que**,
le contrôleur central étant relié à chaque microcontrôleur par une ligne respective (11, 12, 13, 14) de liaison de communication série asynchrone UART :
- lors de l'étape préliminaire le contrôleur central envoie, de façon successive à chaque microcontrôleur, un message d'attribution d'adresse (SET_ADDRESS) contenant le paramètre d'adresse correspondant ; et
- lors de l'étape de commande, le contrôleur central envoie, de façon simultanée à tous les microcontrôleurs, un message contenant au moins une instruction spécifiée par le paramètre d'adresse d'un microcontrôleur destinataire chargé d'exécuter ladite instruction.

2. Procédé selon la revendication 1, dans lequel ladite ligne de liaison de communication série asynchrone est une ligne de communication multiplexée en réception/émission.

3. Procédé selon la revendication 1, dans lequel ladite instruction est une valeur (SET_VALUE) de consigne de vitesse à appliquer à chaque moteur.

4. Procédé selon la revendication 1, dans lequel ladite instruction est une commande (SET_LED) de pilotage d'un équipement associé aux moteurs.

5. Procédé selon la revendication 1, dans lequel ladite instruction est une requête (GET_SPEED) concernant une donnée relative au fonctionnement des moteurs.

6. Procédé selon la revendication 1, dans lequel ladite instruction est une requête (GET_MAXSPEED) concernant une donnée relative à la vitesse maximale de fonctionnement des moteurs.

7. Procédé selon la revendication 1, dans lequel l'étape préliminaire comprend l'activation sélective par le contrôleur central de blocs inhibiteurs (31, 32, 33, 34) interposés sur chaque ligne de liaison respective du contrôleur central aux microcontrôleurs.

8. Procédé selon la revendication 7, dans lequel l'étape préliminaire consiste également à établir successivement entre le contrôleur central (10) et au moins un microcontrôleur (21, 22, 23, 24), au moyen des blocs inhibiteurs (31, 32, 33, 34), un protocole de réinitialisation (FLASH_MODE) d'une mémoire de micrologiciel (200) dudit microcontrôleur.

9. Procédé selon la revendication 7, comprenant également au moins une étape de requête (GET_VERSION) concernant au moins une donnée relative à la mémoire de micrologiciel (200) des microcantrôleurs et/ou aux moteurs associés.

10. Procédé selon la revendication 9, dans lequel ladite donnée est le numéro de version du micrologiciel (200).

11. Procédé selon la revendication 9, dans lequel l'étape de requête est réalisée par le contrôleur central (10) en envoyant à au moins un microcontrôleur (21, 22, 23, 24), au moyen des blocs inhibiteurs (31, 32, 33, 34), un message de requête indiquant ladite donnée et en attendant la réponse dudit microcontrôleur avant de réémettre un nouveau message.

12. Procédé selon la revendication 1, dans lequel, en cas de défaillance d'un moteur, le microcontrôleur (21, 22, 23, 24) associé envoie un message d'urgence à destination du contrôleur central (10).

13. Procédé selon la revendication 12, dans lequel, après réception du message d'urgence, le contrôleur central (10) envoie aux microcontrôleurs (21, 22, 23, 24) un message contenant une instruction de vitesse de consigne nulle à appliquer aux moteurs.

14. Procédé selon l'une des revendications 12 ou 13, dans lequel la défaillance d'un moteur est détectée sur la valeur de la dérivée de la vitesse du moteur.

## Patentansprüche

1. Verfahren zur synchronisierten Steuerung einer Vielzahl von Elektromotoren für eine ferngesteuerte Drehflügel-Drohne, wie einen Quadrocopter, wobei jeder Motor von einem Mikrocontroller (21, 22, 23, 24) gesteuert und die Gesamtheit der Mikrocontroller von einer Hauptsteuereinheit (10) gelenkt wird, wobei dieses Verfahren enthält:
- einen vorbereitenden Schritt, der darin besteht, jedem Mikrocontroller einen Adressenparameter zuzuordnen; und
- im Betrieb mindestens einen eigentlichen Steuerschritt, der darin besteht:
. für die Hauptsteuereinheit, eine mindestens eine durch den Adressenparameter eines für die Ausführung der Anweisung zuständigen Empfangs-Mikrocontrollers spezifizierte Anweisung enthaltende Mitteilung zu senden, und
. für jeden Empfangs-Mikrocontroller, die für ihn bestimmte Anweisung aus der Mitteilung zu entnehmen und auszuführen,
wobei das Verfahren **dadurch gekennzeichnet ist, dass**
da die Hauptsteuereinheit mit jedem Mikrocontroller über eine eigene Verbindungsleitung (11, 12, 13, 14) zur asynchronen seriellen Kommunikation UART verbunden ist:
- die Hauptsteuereinheit im vorbereitenden Schritt nacheinander an jeden Mikrocontroller eine Adressenzuweisungsmitteilung (SET_ADDRESS) sendet, die den entsprechenden Adressenparameter enthält; und
- die Hauptsteuereinheit im Steuerschritt gleichzeitig an alle Mikrocontroller eine Mitteilung sendet, die mindestens eine durch den Adressenparameter eines für die Ausführung der Anweisung zuständigen Empfangs-Mikrocontrollers spezifizierte Anweisung enthält.

2. Verfahren nach Anspruch 1, wobei die asynchrone serielle Kommunikationsleitung eine Kommunikationsleitung im Empfangs-/Sende-Multiplex ist.

3. Verfahren nach Anspruch 1, wobei die Anweisung ein an jeden Motor anzuwendender Geschwindigkeitssollwert (SET_VALUE) ist.

4. Verfahren nach Anspruch 1, wobei die Anweisung ein Befehl (SET_LED) zum Steuern einer den Motoren zugeordneten Ausrüstung ist.

5. Verfahren nach Anspruch 1, wobei die Anweisung eine Anforderung (GET_SPEED) betreffend einen Datenwert bezüglich des Betriebs der Motoren ist.

6. Verfahren nach Anspruch 1, wobei die Anweisung eine Anforderung (GET MAXSPEED) betreffend einen Datenwert bezüglich der maximalen Betriebsgeschwindigkeit der Motoren ist.

7. Verfahren nach Anspruch 1, wobei der vorbereitende Schritt die selektive Aktivierung durch die Hauptsteuereinheit von Sperrblöcken (31, 32, 33, 34) enthält, die auf jeder Verbindungsleitung der Hauptsteuereinheit zu den Mikrocontrollern eingefügt sind.

8. Verfahren nach Anspruch 7, wobei der vorbereitende Schritt ebenfalls darin besteht, nacheinander zwischen der Hauptsteuereinheit (10) und mindestens einem Mikrocontroller (21, 22, 23, 24) mittels der Sperrblöcke (31, 32, 33, 34) ein Reinitialisierungsprotokoll (FLASH_MODE) eines Mikrosoftwarespeichers (200) des Mikrocontrollers zu erstellen.

9. Verfahren nach Anspruch 7, das ebenfalls mindestens einen Anforderungsschritt (GET_VERSION) enthält, der mindestens einen Datenwert bezüglich des Mikrosoftwarespeichers (200) der Mikrocontroller und/oder der zugeordneten Motoren enthält.

10. Verfahren nach Anspruch 9, wobei der Datenwert die Versionsnummer der Mikrosoftware (200) ist.

11. Verfahren nach Anspruch 9, wobei der Anforderungsschritt von der Hauptsteuereinheit (10) ausgeführt wird, indem sie an mindestens einen Mikrocontroller (21, 22, 23, 24) mittels der Sperrblöcke (31, 32, 33, 34) eine den Datenwert anzeigende Anforderungsmitteilung sendet, und indem sie die Antwort des Mikrocontrollers abwartet, ehe sie eine neue Mitteilung weitersendet.

12. Verfahren nach Anspruch 1, wobei im Fall eines Ausfalls eines Motors der zugeordnete Mikrocontroller (21, 22, 23, 24) eine Dringlichkeitsmitteilung an die Hauptsteuereinheit (10) sendet.

13. Verfahren nach Anspruch 12, wobei die Hauptsteuereinheit (10) nach Empfang der Dringlichkeitsmitteilung an die Mikrocontroller (21, 22, 23, 24) eine Mitteilung sendet, die eine Anweisung des Geschwindigkeitssollwerts Null enthält, der an die Motoren anzuwenden ist.

14. Verfahren nach einem der Ansprüche 12 oder 13, wobei der Ausfall eines Motors am Wert der Ableitung der Geschwindigkeit des Motors erfasst wird.

## Claims

1. A method of synchronized control of a plurality of electric motors for a remote-controlled rotary wing drone such as a quadricopter, each motor being controlled by a microcontroller (21, 22, 23, 24) and all the microcontrollers being driven by a central controller (10), said method comprising:
- a preliminary step consisting in assigning to each microcontroller an address parameter; and
- in operation, at least one proper control step, consisting:
. for the central controller, in sending a message containing at least one instruction specified by the address parameter of a destination microcontroller in charge of executing said instruction, and
. for each destination microcontroller, in fetching and executing the instruction that is addressed to it in said message,
method **characterized in that**,
the central controller being connected to each microcontroller by a respective UART asynchronous serial communication connection line (11, 12, 13, 14):
- during the preliminary step, the central controller sends, successively to each microcontroller, an address assignment message (SET_ADDRESS) containing the corresponding address parameter; and
- during the control step, the central controller sends, simultaneously to all the microcontrollers, a message containing at least one instruction specified by the address parameter of a destination microcontroller in charge of executing said instruction.

2. The method according to claim 1, wherein said asynchronous serial communication connection line is a receive/transmit multiplexed communication line.

3. The method according to claim 1, wherein said instruction is a speed set value (SET_VALUE) to be applied to each motor.

4. The method according to claim 1, wherein said instruction is a piloting command (SET_LED) for an equipment associated with the motors.

5. The method according to claim 1, wherein said instruction is a request (GET_SPEED) regarding a piece of data relating to the operation of the motors.

6. The method according to claim 1, wherein said instruction is a request (GET_MAXSPEED) regarding a piece of data relating to the maximum speed of operation of the motors.

7. The method according to claim 1, wherein the preliminary step comprises the selective activation by the central controller of inhibitor blocks (31, 32, 33, 34) interposed on each respective connection line of the central controller to the microcontrollers.

8. The method according to claim 7, wherein the preliminary step also consists in establishing successively between the central controller (10) and at least one microcontroller (21, 22, 23, 24), by means of the inhibitor blocks (31, 32, 33, 34), a reset protocol (FLASH_MODE) for a firmware memory (200) of said microcontroller.

9. The method according to claim 7, also comprising at least one request step (GET_VERSION) regarding at least one piece of data relating to the firmware memory (200) of the microcontrollers and/or to the associated motors.

10. The method according to claim 9, wherein said piece of data is the version number of the firmware (200).

11. The method according to claim 9, wherein the request step is performed by the central controller (10) sending to at least one microcontroller (21, 22, 23, 24), by means of the inhibitor blocks (31, 32, 33, 34), a request message indicating said piece of data, and waiting for the response from said microcontroller before retransmitting a new message.

12. The method according to claim 1, wherein, in case of failure of one motor, the associated microcontroller (21, 22, 23, 24) sends an emergency message to the central controller (10).

13. The method according to claim 12, wherein, after reception of the emergency message, the central controller (10) sends to the microcontrollers (21, 22, 23, 24) a message containing a null set speed instruction to be applied to the motors.

14. The method according to one of claims 12 or 13, wherein the failure of one motor is detected on the value of the motor speed derivative.
